# Europäisches Patentamt

## European Patent Office

## Office européen des brevets

(11) Publication number: **0 198 967**
**B1**

(12) **EUROPEAN PATENT SPECIFICATION**

(45) Date of publication of patent specification: **28.03.90**

(51) Int. Cl.⁵: **C 22 B 60/02, C 22 B 59/00, C 22 B 60/04, C 22 B 9/10**

(21) Application number: **85302664.9**

(22) Date of filing: **16.04.85**

(54) **Process and apparatus for separating actinide or lanthanide metals or their alloys from salts.**

(43) Date of publication of application:
**29.10.86 Bulletin 86/44**

(45) Publication of the grant of the patent:
**28.03.90 Bulletin 90/13**

(84) Designated Contracting States:
**BE DE FR GB NL SE**

(56) References cited:
FR-A- 706 689
GB-A- 864 411
US-A-2 754 347
US-A-2 849 307
US-A-2 849 308
US-A-3 109 731
US-A-3 895 935

Winnacker Küchler: Chem. Technologie Bd. 6
Metallurgie, p. 586-587

(73) Proprietor: **Elliott, Guy Rupert Betts**
**133 La Senda Road**
**Los Alamos New Mexico 87544 (US)**

(72) Inventor: **Elliott, Guy Rupert Betts**
**133 La Senda Road**
**Los Alamos New Mexico 87544 (US)**

(74) Representative: **Everitt, Christopher James**
**Wilders et al**
**F.J. CLEVELAND & COMPANY 40/43 Chancery Lane**
**London WC2A 1JQ (GB)**

Courier Press, Leamington Spa, England.

EP 0 198 967 B1

## Description

This invention relates to processes and apparatus for the separation of actinide and lanthanide metals or alloys from salts, and more particularly for the separation of uranium or its alloys from molten halides or their mixtures.

Nonexplosive penetrators for use against military armour are machined from depleted-uraniumalloy rods. Depleted uranium is formed from by-product uranium compounds depleted in the uranium-235 isotope because that isotope has been removed for use in nuclear reactors. Such isotope separation does not substantially alter the uranium chemistry or the properties of depleted-uranium-alloy rods. Potentially valuable uranium alloy in partially oxidised turnings from such machining, or in some other oxidised forms of uranium alloys, is normally discarded rather than recycled because small pieces of oxidised uranium alloys often do not melt to form massive uranium - the partial oxidation of the alloys produces a coating of uranium oxide which prevents the agglomeration of molten-alloy droplets. Melting of uranium requires a substantially inert environment, usually an inert-gas atmosphere. I have now found that marked technical improvement and corollary economies in the separations can be effected through the use of a molten-salt bath floating on a molten-alloy trap which together (a) wash the oxide coating away from the molten alloy, thereby allowing alloy agglomeration, and (b) permit substantially continous separation of massive uranium alloy through the molten-alloy trap, such massive alloy being substantially free of oxides and salt from the molten-salt bath.

Known processes for recovery of uranium are disclosed in GB-A-864411 and US-A-3895935.

According to a first aspect of the invention, there is provided a process for either continuous or intermittent separation of actinide or lanthanide metal or alloy thereof in massive form from fluorides, oxides, or other salts comprising:

(a) providing a first container;

(b) providing a partial container with at least an upper opening and a lower opening, said lower opening being emplaced within said first container,

(c) filling said first container with molten metal or molten alloy to a metal-discharge level, thus also adding molten metal or alloy into the lower end of said partial container;

(d) adding molten salt into the upper end of said partial container, thereby filling it to a salt-discharge level which leads to a salt-discharge device, thereby forming a floating column of molten salt on the molten metal or alloy within the lower end of said partial container, the weight of said column causing partial displacement of molten metal or molten alloy from said partial container and from said first container, and the interface between the column of molten salt and the molten metal or molten alloy in the lower end of the partial container forming a trap which allows molten metal to pass into the first container but retains molten salt in the partial container;

(e) adding into the upper end of said partial container, and at least partially liquefying, a mixture of said actinide or lanthanide metal or alloy with fluorides, oxides, or other salts, and

(f) allowing separated, substantially molten metal or alloy to discharge at said metal-discharge level and allowing separated, substantially molten salt to discharge at said salt-discharge level.

According to a second aspect of the invention, there is provided an apparatus for either continously or intermittently separating molten actinide or lanthanide metal or alloy thereof in massive form from fluorides, oxides, or other salts in accordance with the above process, the apparatus comprising:

(a) a first container for holding a molten-metal or molten-alloy;

(b) a partial container with at least an upper opening and a lower opening, said lower opening being emplaced within said first container and said upper opening being for receiving, a mixture of said molten actinide or lanthanide metal or alloy with fluorides, oxides, or other salts;

(c) means for discharging separated, substantially molten metal or alloy from the first container; and

(d) means for discharging separated, substantially molten salt from the partial container.

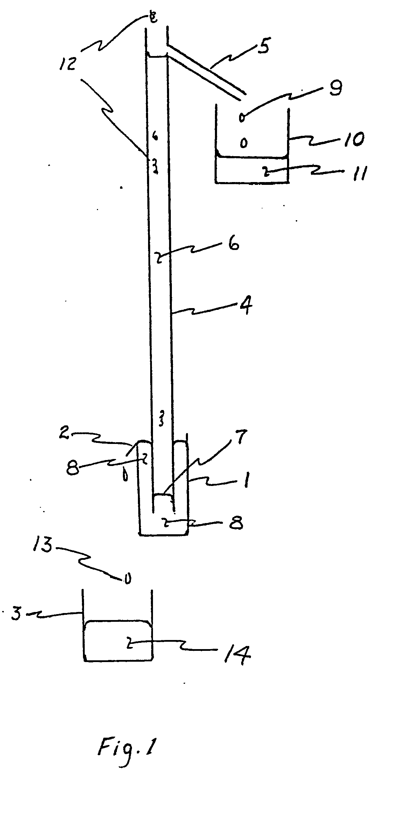

The invention will now be described further below, merely by way of example with reference to Figure 1 which shows an embodiment of apparatus according to the invention and to Examples 1-4.

The conversion of uranium oxide to uranium fluoride by reaction with hydrogen fluoride is known. I have now found that conversion of uranium oxide coatings to uranium fluorides is useful prior to separation through use of a molten-salt bath floating on a molten-alloy trap, as discussed above - economies in such separations result because such uranium fluoride dissolves in said molten-salt bath and is more easily removed than is uranium oxide, which is substantially insoluble in said bath.

Depleted uranium for alloy formation, e.g., for said penetrators, is usually produced by reaction of uranium fluoride with magnesium in highpressure vessels at temperatures of about 1300°C, thus melting uranium, at 1133°, and magnesium fluoride, at 1261°. If both materials have been molten throughout, the cold uranium product will be found in massive form and can readily be broken away from the magnesium fluoride by-product. If, however, the pressure and temperature do not both rise to the high values required during reduction, part or all of the uranium will be trapped in solid magnesium fluoride as dispersed, frozen droplets rather than as massive, recoverable uranium. Under current practice uranium in such dispersed droplets is discarded; such lack of separation results in loss of as much as five percent of the otherwise possible uranium production in commercial operations. I have now found that magnesium-fluoride-free massive uranium can be recovered from such dispersed droplets by melting them in a molten-salt bath floating on a molten uranium trap; furthermore, such recovery can be substantially continuous. There is major economic advantage to recovery of such uranium.

As was indicated above, the batch reductions of uranium fluoride by magnesium in pressure vessels do not always lead to useful products. I have now found that substantially continuous reduction of uranium fluoride by magnesium can be carried out by introducing said uranium fluoride and said magnesium into a molten-salt bath floating on a molten-uranium trap and allowing said reduction to take place within the molten-salt bath. It is further advantageous to operate said molten-salt bath in a temperature gradient such that the uranium trap and the adjacent molten salt are at about 1150°C, i.e., above the uranium melting point, while the molten salt near the top of the bath is at about 1050°C, i.e., below the boiling point of magnesium.

The following examples illustrate but do not limit the invention:-

Example 1

Oily, heavily oxidised coatings are present on the turnings produced during the machining of uranium alloy rods to form armour penetrators. Although the oil used is water soluble and can readily be washed off, the turnings are oxide coated and cannot alone be melted to massive alloys.

Washed and dried oxidised turnings were melted, agglomerated, and recovered using a first molten-salt bath and a first molten-alloy trap in an apparatus described with reference to FIG. 1, as follows:

In an inert atmosphere, molten-uranium alloy at 1150°C was held in a first alumina cup 1 of 2-inch diameter, 4-inch high, filling it to a first molten-alloy pouring lip 2. This first molten-alloy pouring lip was positioned to pour into an alumina billet mold 3 below. There was provided a first alumina tube 4 of 1-inch diameter, 20-inch high, open at both ends, with first molten-salt pouring tube 5 attached 19 inches up from the bottom of said first alumina tube. The bottom of this first alumina tube 4 was inserted three inches through the center of the exposed surface of the molten alloy in the cup, thereby creating a container with alumina tube sides and dense but movable molten-alloy bottom, which bottom could pass alloy but retain salt.

Molten salt was formed when a mixture of 50 mole percent each of magnesium fluoride and calcium chloride was added into the alumina tube 4 and this halide mixture melted with liquidus temperature of approximately 975°C. A temperature of 1150°C was maintained throughout this bath. Addition of this molten salt caused displacement of a weight of uranium alloy equal to the weight of the molten salt added. The volume of molten alloy displaced from the first alumina cup was approximately one eighth the volume of the molten salt added, reflecting densities for uranium alloy of approximately 18 g/cm$^3$ and for molten salt of approximately 2.25 g/cm$^3$; (18/2.25) = 8.

The volume of the molten salt 6 within the alumina tube was increased until the operating conditions were reached, namely until an approximately 18-inch column of molten salt 6 floated at an interface 7 between molten salt and molten-alloy 8 within the alumina tube and approximately 2.25 inches lower than the surface of the molten alloy inside the first alumina cup 1 but outside the first alumina tube 4.

This column of molten salt is the first molten-salt bath. If excess molten salt is added, the excess can be discharged through the first molten-salt pouring tube 5, discharging as drops 9 which fall into molten-salt discharge cup 10 and form collected discharge 11; this method of discharge establishes an upper limit to the height of the first molten-salt bath. Likewise, the molten alloy in the first alumina cup, as here configured, is the first molten-alloy trap. If uranium alloy is added 12, it can be separated as molten-alloy drops 13 after passing through the first molten-alloy trap, which drops collect as massive uranium alloy 14 in billet mold 3.

Oxidised uranium alloy added to this first molten-salt bath and thence to the first molten-alloy trap led to separation of drops of clean molten alloy out of said molten-alloy trap, which drops formed a billet. There was no evidence of leakage of molten salt past the first molten-alloy trap. Except for pauses to change billet molds or for uranium oxide removal, this system could be operated continuously, producing reusable alloy from material which is not now recycled.

Ceramic fragments (e.g., alumina of density 4 g/cm$^3$) could be floated at the interface 7 to hold unmelted added uranium alloy until it dripped as a discontinuous phase through a contiunuous phase of molten salt. Such dripping assures substantially complete washing away of oxide from the uranium.

Example 2

Oxidised machining turnings, as in Example 1, were washed and treated with 53% hydrofluoric acid for three minutes, thereby converting uranium oxide to uranium fluoride. Precipitation of a uranium-fluoride film on the uranium alloy substantially prevents reaction of hydrofluoric acid with uranium alloy during short exposures. The turnings were dried.

In an apparatus as described for Example 1, this treated product, i.e., uranium alloy and uranium fluoride, was introduced into a molten-salt bath of composition 50 mole percent each of magnesium fluoride and calcium chloride at a temperature of 1150°C. Uranium fluoride from this treated product dissolved into this molten-salt bath, and uranium alloy melted and settled from this molten-salt bath. Clean uranium alloy separated through a molten-alloy trap. Uranium fluoride dissolved into the molten-salt bath, adding to the molten salt volume and causing discharge through a molten-salt pouring tube. If necessary, magnesium fluoride and calcium chloride can be added along with uranium alloy additions to maintain a suitable bath composition as uranium fluoride is added.

This operation can be continuous throughout because massive uranium alloy is removed separately through the molten-alloy trap, and the uranium fluoride is removed through the molten-salt bath.

Example 3

Crushed reject material from an inadequately melted commercial batch reduction of uranium fluoride was fed into a third molten-salt bath as in Example 1 and held at a temperature of 1150° throughout. Because the reject material contained approximately 30 mole percent of uranium and 62 mole percent of magnesium fluoride, along with impurities, the addition of this material would quickly alter the molten-alloy composition in this third molten-salt bath. Therefore, it was necessary to add calcium chloride equal in amount to the magnesium fluoride added with the reject material.

Clean, massive uranium (not alloy this time) was separated continuously through the third molten-uranium trap, and by-product magnesium fluoride (plus calcium chloride) passed out through the third molten-salt pouring tube.

Example 4

Uranium tetrafluoride, magnesium, and calcium chloride, in mole proportions 1:2.1:2, were fed as mixed pellets into a fourth molten-salt bath floating on a fourth molten-uranium trap, again as in Example 1. In this case the fourth molten-alloy bath was maintained in a temperature gradient, i.e., 1050° at the top and 1150° at the region of the fourth molten-uranium trap. Upon heating in the fourth molten-salt bath, the pellet materials reacted to form uranium and magnesium fluoride-calcium chloride molten salt. Clean, molten uranium was separated continuously through the fourth molten trap, and excess molten salt passed out through the fourth molten-salt pouring tube.

It is believed that other actinide and lanthanide metals, such as plutonium and their alloys can be separated from salts by a process and apparatus in which this invention is embodied.

Claims

1. A process for either continuous or intermittent separation of actinide or lanthanide metal or alloy thereof in massive form from fluorides, oxides, or other salts comprising:

(a) providing a first container (1);

(b) providing a partial container (4) with at least an upper opening and a lower opening, said lower opening being emplaced within said first container (1),

(c) filling said first container (1) with molten metal or molten alloy (8) to a metal-discharge level (2), thus also adding molten metal or alloy (8) into the lower end of said partial container (4);

(d) adding molten salt (6) into the upper end of said partial container (4), thereby filling it to a salt-discharge level which leads to a salt-discharge device (5), thereby forming a floating column of molten salt (6) on the molten metal or alloy within the lower end of said partial container (4), the weight of said column causing partial displacement of molten metal or molten alloy (8) from said partial container (4) and from said first container (1), and the interface (7) between the column of molten salt (6) and the molten metal or molten alloy (8) in the lower end of the partial container (4) forming a trap which allows molten metal to pass into the first container (1) but retains molten salt in the partial container (4);

(e) adding into the upper end of said partial container (4), and at least partially liquefying, a mixture (12) of said actinide or lanthanide metal or alloy with fluorides, oxides, or other salts, and

(f) allowing separated, substantially molten metal or alloy (13) to discharge at said metal-discharge level (2) and allowing separated, substantially molten salt (6) to discharge at said salt-discharge level.

2. A process according to Claim 1 in which the actinide metal is uranium.

3. A process according to Claim 2 in which uranium oxide is converted to uranium fluoride within the partial container (4) prior to separation.

4. A process according to Claim 2 or 3 in which uranium fluoride is reduced by magnesium within the partial container (4) prior to said separation.

5. A process according to Claim 2, 3 or 4 in which the reactions are caused to take place while excluding gases which react with the metals or the salts.

6. An apparatus for either continuously or intermittently separating molten actinide or lanthanide metal or alloy thereof in massive form from fluorides, oxides, or other salts in accordance with claim 1, the apparatus comprising:

(a) a first container (1) for holding a molten-metal or molten-alloy (8);

(b) a partial container (4) with at least an upper opening and a lower opening, said lower opening being emplaced within said first container (1) and said upper opening being for receiving, a mixture (12) of said molten actinide or lanthanide metal or alloy with fluorides, oxides, or other salts;

(c) means for discharging separated, substantially molten metal or alloy from the first container (1); and

(d) means for discharging separated, substantially molten salt from the partial container (4).

Patentansprüche

1. Ein Verfahren zur entweder kontinuierlichen oder diskontinuierlichen Abtrennung von Actiniden- oder Lanthanidenmetall oder von Legierungen daraus in massiver Form aus Fluoriden, Oxiden und anderen Salzen, das umfaßt:

(a) Bereitstellen eines ersten Behälters (1);

(b) Bereitstellen eines Teilbehälters (4) mit wenigstens einer oberen Öffnung und einer unteren Öffnung, wobei die untere Öffnung innerhalb des ersten Behälters (1) angeordnet ist,

(c) Füllen des ersten Behälters (1) bis zu einem Metall-Abflußniveau (2) mit geschmolzenem Metall oder einer geschmolzenen Legierung (8), wodurch gleichzeitig geschmolzenes Metall oder die geschmolzene Legierung (8) in das untere Ende des Teilbehälters (4) eingeführt wird;

(d) Zugeben von geschmolzenem Salz (6) in das obere Ende des Teilbehälters (4), wodurch dieser bis zu einem Salz-Abflußniveau, das in eine Salz-Abflußeinrichtung (5) führt, gefüllt wird, wodurch eine schwimmende Säule aus geschmolzenem Salz (6) auf dem geschmolzenen Metall oder der geschmolzenen Legierung im unteren Ende des Teilbehälters (4) gebildet wird, wobei das Gewicht der Säule eine teilweise Verdrängung von geschmolzenem Metall oder geschmolzener Legierung (8) aus dem Teilbehälter (4) und aus dem ersten Behälter (1) bewirkt, und wobei die Grenzfläche (7) zwischen der Säule aus geschmolzenem Salz (6) und dem geschmolzenen Metall oder der geschmolzenen Legierung (8) in dem unteren Ende des Teilbehälters (4) eine Falle bildet, die einen Übertritt von geschmolzenem Metall in den ersten Behälter (1) ermöglicht, jedoch geschmolzenes Salz in dem Teilbehälter (4) zurückhält;

(e) Zugeben einer Mischung (12) aus dem genannten Actiniden- oder Lanthanidenmetall oder der Legierung daraus mit Fluoriden, Oxiden oder anderen Salzen in das obere Ende des Teilbehälters (4) und wenigstens teilweises Verflüssigen dieser Mischung, und

(f) Abfließenlassen von abgetrenntem, im wesentlichen geschmolzenem Metall oder geschmolzener Legierung (13) auf dem Metall-Abflußniveau (2) sowie Abfließenlassen von im wesentlichen geschmolzenem Salz (6) auf dem Salz-Abflußniveau.

2. Ein Verfahren nach Anspruch 1, bei dem das Actinidenmetall Uran ist.

3. Ein Verfahren nach Anspruch 2, bei dem vor der Abtrennung Uranoxid innerhalb des Teilbehälters (4) in Uranfluorid umgewandelt wird.

4. Ein Verfahren nach Anspruch 2 oder 3, bei dem vor der Abtrennung Uranfluorid in dem Teilbehälter (4) mit Magnesium reduziert wird.

5. Ein Verfahren nach Anspruch 2, 3 oder 4, bei dem man die Reaktionen ablaufen läßt, während man Gase, die mit den Metallen oder den Salzen reagieren, fernhält.

6. Eine Vorrichtung zur entweder kontinuierlichen oder diskontinuierlichen Abtrennung von geschmolzenem Actiniden-oder Lanthanidenmetall oder einer Legierung daraus in massiver Form aus Fluoriden, Oxiden oder anderen Salzen gemäß Anspruch 1, wobei die Vorrichtung aufweist:

(a) einen ersten Behälter (1) zur Aufnahme eines geschmolzenen Metalls oder einer geschmolzenen Legierung (8);

(b) einen Teilbehälter (4) mit wenigstens einer oberen Öffnung und einer unteren Öffnung, wobei die untere Öffnung innerhalb des ersten Behälters (1) angeordnet ist und die obere Öffnung der Aufnahme einer Mischung (12) des geschmolzenen Actiniden- oder Lanthanidenmetalls oder der Legierung daraus mit Fluoriden, Oxiden oder anderen Salzen dient;

(c) Mittel für die Abgabe von abgetrenntem, im wesentlichen geschmolzenem Metall oder im wesentlichen geschmolzener Legierung aus dem ersten Behälter (1); und

(d) Mittel für die Abgabe von abgetrenntem, im wesentlichen geschmolzenem Salz aus dem Teilbehälter (4).

**Revendications**

1. Procédé de séparation continue ou intermittente d'un métal appartenant aux actinides ou lanthanides ou d'un alliage de celui-ci sous une forme massive à partir de fluorures, d'oxydes ou d'autres sels, consistant:

(a) à prévoir un premier récipient (1);

(b) à prévoir un récipient partiel (4) avec au moins une ouverture supérieure et une ouverture inférieure, l'ouverture inférieure étant agencée à l'intérieur du premier récipient (1);

(c) à remplir le premier récipient (1) de métal fondu ou d'alliage fondu (8) jusqu'à un niveau de déchargement de métal (2), en ajoutant ainsi également du métal ou de l'alliage fondu (8) dans l'extrémité inférieure du récipient partiel (4) précité;

(d) à ajouter du sel fondu (6) dans l'extrémité supérieure du récipient partiel (4), en le remplissant ainsi jusqu'à un niveau de déchargement de sel qui conduit à un dispositif de déchargement de sel (5), en formant ainsi une colonne flottante de sel fondu (6) sur le métal ou l'alliage fondu à l'intérieur de l'extrémité inférieure du récipient partiel (4), le poids de cette colonne provoquant un déplacement partiel de métal fondu ou d'alliage fondu (8) par rapport au récipient partiel (4) et au premier récipient (1), et l'interface (7) entre la colonne de sel fondu (6) et le métal fondu ou l'alliage fondu (8) dans l'extrémité inférieure du récipient partiel (4) formant un piège qui permet le passage de métal fondu dans le premier récipient (1) mais retient le sel fondu dans le récipient partiel (4);

(e) à ajouter dans l'extrémité supérieure du récipient partiel (4), et à liquéfier au moins partiellement un mélange (12) de ce métal du type actinide ou lanthanide ou alliage avec des fluorures, oxydes ou d'autres sels, et

(f) à laisser le métal ou l'alliage essentiellement fondu, séparé (1'3) se décharger à ce niveau de déchargement de métal (7) et à laisser le sel essentiellement fondu, séparé (6) se décharger à ce niveau de déchargement de sel.

2. Procédé suivant la revendication 1, caractérisé en ce que le métal du type actinide est l'uranium.

3. Procédé suivant la revendication 2, caractérisé en ce que de l'oxyde d'uranium est converti en fluorure d'uranium à l'intérieur du récipient partiel (4) avant la séparation.

4. Procédé suivant l'une ou l'autre des revendications 2 et 3, caractérisé en ce que le fluorure d'uranium est réduit par du magnésium à l'intérieur du récipient partiel (4) avant la séparation précitée.

5. Procédé suivant l'une quelconque des revendications 2, 3 et 4, caractérisé en ce que les réactions sont amenées à se produire pendant que l'on exclut les gaz qui réagissent avec les métaux ou les sels.

6. Appareil pour séparer de façon continue ou intermittente un métal appartenant aux actinides ou lanthanides ou un alliage de celui-ci sous une forme massive à partir de fluorures, d'oxydes ou d'autres sels suivant la revendication 1, cet appareil comprenant:

(a) un premier récipient (1) pour contenir un métal fondu ou un alliage fondu (8);

(b) un récipient partiel (4) avec au moins une ouverture supérieure et une ouverture inférieure, l'ouverture inférieure étant agencée à l'intérieur du premier récipient (1) et l'ouverture supérieure étant agencée pour recevoir un mélange (12) de ce métal du type actinide ou lanthanide ou alliage fondu avec des fluorures, oxydes et autres sels;

(c) un moyen pour décharger le métal ou alliage essentiellement fondu, séparé du premier récipient (1); et

(d) un moyen pour décharger le sel essentiellement fondu, séparé du récipient partiel (4).

Fig. 1